# EUROPEAN PATENT SPECIFICATION

(11) **EP 2 614 657 B1**
(45) Date of publication and mention of the grant of the patent: **12.08.2015**
(21) Application number: 11732141.4
(22) Date of filing: 06.01.2011
(51) Int. Cl.: H04R 1/10, H04R 5/033, H04R 5/04

(54) **DJ MIXING HEADPHONES**
MIXING-KOPFHÖRER FÜR DJS
CASQUE D'ÉCOUTE DE MIXAGE POUR DISC-JOCKEY

(30) Priority: 06.01.2010 US 292832 P; 22.07.2010 US 366268
(43) Date of publication of application: 17.07.2013
(73) Proprietor: Skullcandy, Inc., Park City, UT 84098 (US)
(72) Inventor: KELLY, Peter, M., Park City, UT 84098 (US); ALDEN, Richard, P., Park City, UT 84098 (US); LEVINE, Daniel, Newport Beach, CA 92660 (US); POULSEN, Joshua, B., Salt Lake City, UT 84104 (US)
(74) Representative: Schröer, Gernot H.
(86) International application number: PCT/US2011/020368
(87) International publication number: WO 2011/085096

(56) References cited:
- EP-A1- 1 760 896
- EP-A2- 1 742 352
- WO-A1-2006/073716
- WO-A2-2007/110807
- WO-A2-2010/014561
- JP-A- 2002 111 416
- KR-Y1- 200 372 720
- US-A- 4 829 571
- US-A1- 2006 045 304
- US-A1- 2009 041 267
- "Operating instructions DJM-800", , 1 January 2005 (2005-01-01), XP55038886, Retrieved from the Internet: URL:http://www.pioneer.eu/eur/products/44/ 74/DJM-800/media.html [retrieved on 2012-09-21]

## Description

### BACKGROUND OF THE INVENTION

### The Field of the Invention

Implementations of the present invention relate generally to headphones. In particular, implementations of the present invention relate to headphones that can be used by a Disc Jockey ("DJ") to assist the DJ in selecting and playing music.

### Background and Relevant Art

A DJ is a person that selects and plays music, usually for an audience. Although there are many types of DJs, one of the most popular types of a DJ is a club DJ that selects and plays recorded music for a live audience. The club DJ can select and play music in bars, nightclubs, raves, or concerts. The club DJ can provide music in an arrangement and volume that allows the audience to enjoy and dance to the music. The DJ may play recorded music from a variety of music storage mediums, including compact discs, vinyl records, cassette tapes, or computer media players.

DJs can distinguish themselves in the industry based on their unique music selection, as well as the way in which the DJ mixes music tracks together, or transitions from one song to the next. For example, several techniques used by DJs as a means to mix and blend recorded music together include: beat-matching; phrasing; slip-cueing; beat juggling; scratching; phase shifting; sampling; and harmonic mixing. Each of these techniques can allow the DJ to add a creative and unique style to the playback of recorded music.

In order to mix music tracks, the DJ may use various pieces of music equipment. For example, the DJ may use a sound system for amplification of the recordings. Additionally, the DJ may use a combination of at least two audio playing devices that are connected to the sound system. The two audio playing devices may be coupled with a DJ mixing device that allows the DJ to create a continuous playback of music by alternating from one audio playing device to the other audio playing device. This can allow the DJ to ensure that there are no gaps of silence between the completion of one music track and the beginning of another. Moreover, the DJ can use one or more of the above mentioned techniques, for example beat-matching, to create a smooth and unique transition from one music track to the next.

In addition to the musical equipment discussed above, the DJ may also use headphones. For example, the DJ may use the headphones to listen to a first music track from a first audio playing device while a second music track from a second audio playing device is playing through the sound system. Thus, the headphones allow the DJ to cue the first music track, for example, so the DJ can prepare to smoothly transition from the second music track to the first music track.

Conventional DJ headphones often include stereo over the ear headphones that include left and right speakers. Due to the fact that the DJ may listen to the first music track through the headphones and the second music track through the sound system simultaneously, the DJ may only use one of the headphone speakers. For example the DJ may hold the left speaker of the headphones against the left ear such that the left ear is listening to the first music track through the headphone speaker, while the right ear is listening to the second music track being played through the sound system. In this situation, the right speaker on the headphone may simply hang down next to the DJ's neck, or be propped-up near the top of the DJ's head.

Document WO 2007/110807 A2 describes a device for processing data for headphones, comprising an input unit for receiving input data, means for generating wearing information of the headphone, wherein the wearing information is based on sensor information and indicates a wearing state in which the headphones are worn, and comprising a processing unit for processing the input data on the basis of the wearing information, thereby generating output data.

Document US 2006/0045304 A1 describes an earphone device for use with a host device, including an earphone and a detection element, wherein the earphone is capable of converting sound signals provided by the host device into audible sound. The detection element provides detection output from which it can be determined whether or not the earphone is in a listening position, wherein the detection output can be used to cause the host device to control or perform an operation.

Document US 2009/0041267 A1 describes a headset used as an external loud speaker, the headset including a signal receiver, speaker parts, hinge parts, and amplifiers, wherein the speaker parts can change their direction through the hinge parts. The output of the speakers is adjusted according to the direction of the speaker parts. When the output of the speakers is increased, the speaker parts of the headset are used as an external speaker.

### BRIEF SUMMARY OF THE INVENTION

Implementations of the present invention comprise devices, systems, and methods, for assisting a DJ in playing and mixing recorded music. In particular, one or more implementations of the invention provide a set of mixing headphones that can selectively channel all musical components from a stereo audio signal into a single headphone speaker. The mixing headphones can include various audio control features. For example, the mixing headphones can automatically mute one of the speakers on the headphones, and at the same time, the mixing headphones can direct all of the stereo channels to the opposing speaker on the mixing headphones. The DJ can trigger the audio control features of the mixing headphones in a variety of ways, including by pressing a button located on the mixing headphones or rotating a speaker assembly on the mixing headphones.

For example, one implementation of a set of headphones can include a first speaker assembly and a second speaker assembly. The set of headphones can also include an audio control device operatively associated with one or more of the first speaker assembly and the second speaker assembly. A first pivot configured to enable the first speaker assembly to rotate in and out of a default listening position may be provided, wherein the audio control device may be activated when the first speaker assembly is rotated out of the default listening position. Upon activation, the audio control device can combine and direct first and second audio signals to one of the first and second speaker assemblies, and mute the other of the first and second speaker assemblies.

Additionally, another implementation of a set of headphones can include a first speaker assembly and a second speaker assembly. Also, the set of headphones can include a mute activation mechanism positioned on the set of headphones. Furthermore, the set of headphones can include an audio control device configured to mute one or more of the first and second speaker assemblies. Articulating the mute activation mechanism to an on position can activate the audio control device to mute one or more of the first and second speaker assemblies.

Furthermore, a set of headphones can include a first speaker assembly and a second speaker assembly. The set of headphones can also include a first input jack positioned on the first speaker assembly. The first input jack can be configured to receive an audio cable. Additionally, the set of headphones can include a second input jack positioned on the second speaker assembly. The second input jack can be configured to receive an audio cable. In addition to the foregoing, the set of headphones can include one or more audio control devices configured to transmit one or more audio signals received via an audio cable secured to either the first input jack or the second input jack to both the first and second speaker assemblies.

Additional features and advantages of exemplary implementations of the invention will be set forth in the description which follows, and in part will be obvious from the description, or may be learned by the practice of such exemplary implementations. The features and advantages of such implementations may be realized and obtained by means of the instruments and combinations particularly pointed out in the appended claims. These and other features will become more fully apparent from the following description and appended claims, or may be learned by the practice of such exemplary implementations as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. It should be noted that the figures are not drawn to scale, and that elements of similar structure or function are generally represented by like reference numerals for illustrative purposes throughout the figures. Understanding that these drawings depict only typical embodiments of the invention and are not therefore to be considered to be limiting of its scope, the invention will be described and explained with additional specificity and detail through the use of the accompanying drawings in which:
Figure 1 illustrates an artistic rendering of a DJ using mixing headphones according to an implementation of the present invention;
Figure 2 illustrates a right side perspective view of the mixing headphones of Figure 1;
Figure 3 illustrates a left side perspective view of the mixing headphones of Figure 1;
Figure 4 illustrates a front view of the mixing headphones of Figure 1 in which the right speaker is rotated out of a default listening position;
Figure 5 is a bottom view of the mixing headphones of Figure 1;
Figure 6 illustrates top views of various audio control devices; and
Figure 7 is a front view of the mixing headphones of Figure 1, albeit in a folded configuration.

### DETAILED DESCRIPTION OF THE PREFERRED EMBODIMENTS

Implementations of the present invention comprise devices, systems, and methods, for assisting a DJ in playing and mixing recorded music. In particular, one or more implementations of the invention provide a set of mixing headphones that can selectively channel all musical components from a stereo audio signal into a single headphone speaker. The mixing headphones can include various audio control features. For example, the mixing headphones can automatically mute one of the speakers on the headphones, and at the same time, the mixing headphones can direct all of the stereo channels to the opposing speaker on the mixing headphones. The DJ can trigger the audio control features of the mixing headphones in a variety of ways, including by pressing a button located on the mixing headphones or rotating a speaker assembly on the mixing headphones.

Additionally, one or more implementations of a set of headphones can make the mixing process more comfortable. For example, in one or more implementations the speaker assemblies can rotate in and out of a default listening position and/or be muted. Thus, a DJ using such headphones does not have to hold a single headphone speaker between the ear and the shoulder by cranking the DJ's neck toward the shoulder producing an uncomfortable stance. Moreover, the DJ does not have to hold the single headphone speaker on the ear with a hand, thus limiting the ability for the DJ to control the musical equipment. Thus, one or more implementations can allow a DJ to use both hands to control equipment during the mixing and/or transitioning of one music track to the next.

In additionally or alternatively to increasing the comfort of mixing, one or more implementations can also increase the ability to properly mix music. In particular, headphones may include left and right speakers in a stereo configuration. As recorded music often uses different stereo channels for different musical components of a single music track. Thus, a DJ listening to only one speaker of stereo headphones may not completely hear all the musical components from a particular music track.

For example, the percussion component on a music track may be directed to the right speaker, while the vocal component on the same music track is directed to the left speaker. One or more implementations of the present invention can push both components of a stereo recording to a single speaker, while muting the other speaker. One will appreciate in light of the disclosure herein that this can allow the DJ to hear both the percussion and vocal components of the music track, while at the same time listening to another music track that is being played through the sound system. Furthermore, due to the fact the DJ may listen to all the musical components of a music track through the headphones while mixing, the DJ may be able to create a high quality transition from one music track to the next. Moreover, the DJ may not have to physically switch between the right and left speakers of the headphones to acceptably mix the music track. Avoiding the need to physically switch between the left and right speakers can help avoid inadvertently making a mistake during the mixing of the music track.

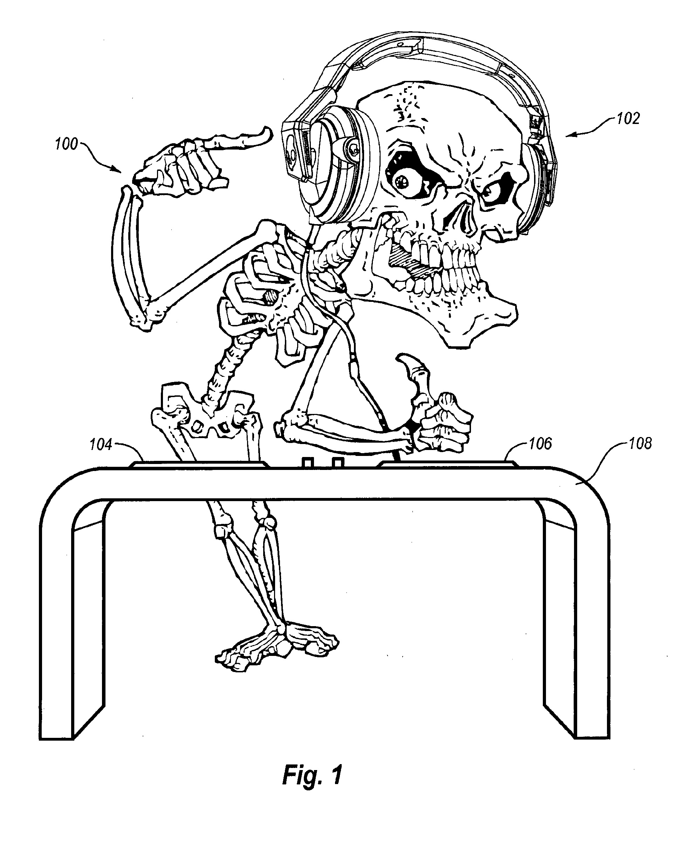

Referring now to the Figures, Figure 1 illustrates an artistic rendering of a DJ 100 using a set of headphones 102 in accordance with an implementation of the present invention. As shown the DJ 100 can use the headphones 102 to listen to music being played on an audio device (in this instance a mixing table 108). As explained in greater detail below, the DJ 100 can use the headphones 102 to listen to and mix music from a first audio playing device 104 and a second audio playing device 106 on the mixing table 108. In particular, the headphones 102 can allow the DJ 100 to create a continuous playback of music by alternating from one audio playing device 104 to the other audio playing device 106. Moreover, the DJ 100 can use one or more of the techniques, for example beat-matching, to create a smooth and unique transition from one music track to the next.

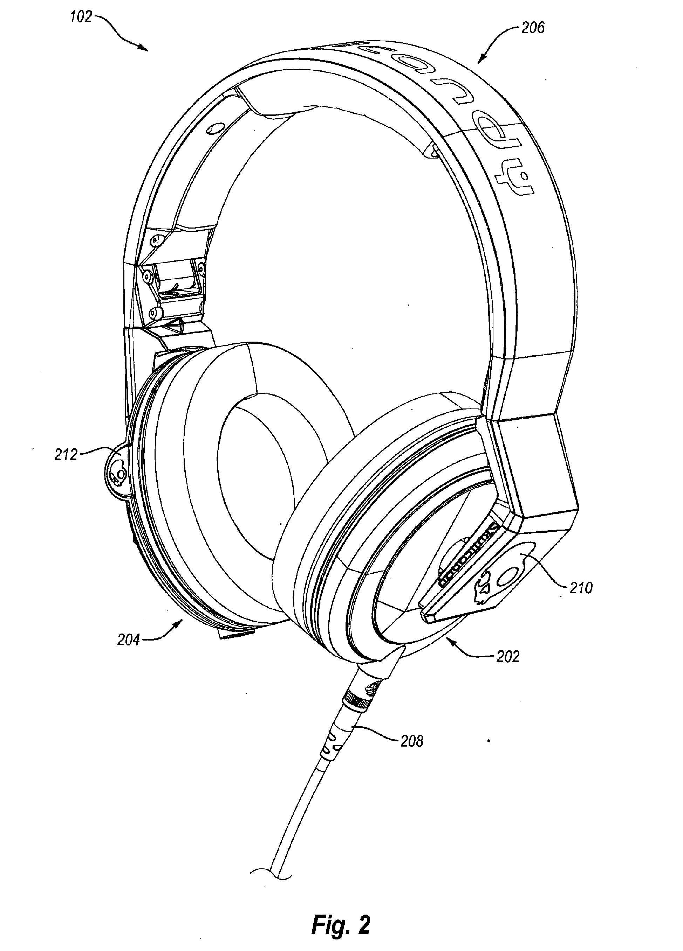

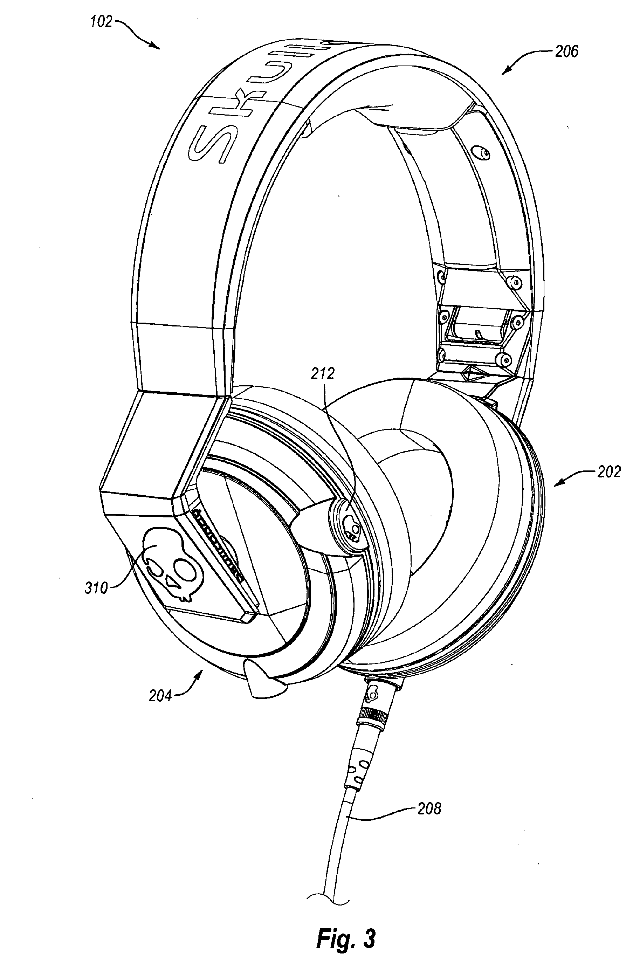

Figures 2 and 3 and the corresponding text, describe a number of the details and features of headphones 102 in accordance with one or more implementations of the present invention. In particular, Figures 2 and 3 illustrates that the headphones 102 can include a first speaker assembly 202 and a second speaker assembly 204. A headband 206 can connect the first and second speaker assemblies 202, 204 together. While the headphones shown in Figures 1-3 and the rest of the Figures have an over-the-ear headband configuration, one will appreciate that in other implementations, the headphones 102 can have other configurations such as behind-the-neck headphones, ear buds, or any other configuration or style of headphones.

The headphones 102 can further include an audio wire 208. The audio wire 208 can connect the headphones 102 to an audio playing device, such as a mixing table 108. The audio wire 208 further can include a jack at one end of the audio cable such that the audio wire 208, and thus the headphones 102, can be connected to an audio playing device. In general, the audio playing device produces an audio signal that can be carried by the audio wire 208 to the first and second speaker assemblies 202 and 204. The first and second speaker assemblies 202 and 204 can then convert the audio signal to sound waves.

Although the headphones 102 are illustrated in Figures 2-3 as including an audio wire 208, other implementations of the headphones 102 can be configured to be wireless, and thus receive a wireless audio signal. For example, a wireless version of the headphones 102 may wirelessly receive an audio signal by way of an infrared signal, BLUETOOTH signal, and/or any other wireless communication signal. The wireless capability of the headphones 102 may increase the ability for the DJ to move, dance, and control other equipment while wearing the headphones 102.

The headphones 102 further can include one or more audio control devices operatively associated with one or more of the first speaker assembly 202 and the second speaker assembly 204. The one or more audio control devices can allow the DJ to control how the audio signal is channeled to the first speaker assembly 202 and the second speaker assembly 204. For example, as explained in greater detail below, the one or more audio control devices can allow for muting, combining, and directing of the audio signals. As explained in greater detail below with reference to Figure 8, the one or more audio control devices can comprise a printed circuit board ("PCB") or a printed wiring board (PWB) and/or one or more electrical or electromechanical switches.

In at least one implementation, the headphones 102 can include one or more audio control buttons for activating the one or more audio control devices. For example, Figures 2 and 3 illustrates that the headphones 102 can include a first audio control button 210 and a second audio control button 310. The audio control buttons 210 and 310 can be located on the outer cover of the speaker assemblies 202 and 201, as shown in Figures 2-3. In other implementations, the audio control buttons 210 and 310 can be positioned on various other locations of the speaker assemblies 202 and 204 or mixing headphones 102. For example, the audio control buttons 210 and 310 can be positioned on the top portion of the speaker assemblies 202 and 204, or alternatively, the audio control buttons 210 and 310 can be incorporated into the headband 206.

In addition to varying the position and location of the audio control buttons 210 and 310, the configuration of the audio control buttons 210 and 310 can have various other configurations. For example, Figures 2 and 3 illustrate the audio control buttons as comprising a skull logo. In alternative implementations, the audio control buttons 210 and 310 can have a substantially cylindrical configuration. In further implementations, the audio control buttons 210 and 310 can have other configurations such as square, oval, or triangular configurations. Moreover, the audio control buttons 210 and 310 can be configured to be in a shape of a graphic, logo, or other aesthetic form that distinguishes the audio control buttons 210 and 310.
Just as the configuration of the audio control buttons 210 and 310 can vary from one implementation to the next, the audio control buttons 210 and 310 can include various features. For example, the audio control buttons 210 and 310 include transparent or translucent material such that the audio control buttons 210 and 310 can incorporate a light source that is visible through the audio control buttons 210 and 310. The light source, for example, can be used to indicate the position of the audio control buttons 210 and 310. For instance, the light source can change colors or turn on and off based on whether the audio control buttons 210 and 310 are in an "ON" position or an "OFF" position. Moreover, the light source can be configured to blink or change with the beat of the music track being played through the headphones 102.

As mentioned above, the DJ can use the audio control buttons 210 and 310 to active the one or more audio control devices, which control how the audio signal is channeled to the first speaker assembly 202 and the left speaker assembly 204. For example, in one implementation the headphones 102 are configured to operate as stereo headphones, i.e., a first channel of the audio signal is played through the first or left speaker assembly 202, and a second channel of the audio signal is played through the second or right speaker assembly 204. As often is the case, the DJ 100 will need to cue or mix a first music track being played with a next or second music track. Thus, the DJ 100 may need the ability to listen to a first music track through the headphones 102, while also listening to a second music track through the sound system.

In this situation, DJ 100 can press the first audio control button 210 to the "ON" position. By so doing, the DJ 100 can activate the one or more audio control devices, which in turn can mute the first speaker assembly 202. With the first speaker assembly 202 muted, the DJ can adequately hear the second music track that is playing on the sound system. At the same time the first speaker assembly 202 is muted, the one or more audio control devices can combine the first channel of the audio signal that was being played on the first speaker assembly 202 with the second channel of the audio signal being played on the second speaker assembly 204.

The one or more audio control devices can then direct the combined or compete audio signal to the second speaker assembly 204 such that the second speaker assembly 204 plays both channels or components of the audio signal simultaneously. Specifically, the second speaker assembly 204 can effectively receive and play a mono signal based on a combination of the prior stereo signals played individually by each speaker assembly prior to the DJ 100 pressing the first audio control button 210. Furthermore, even though the first speaker assembly 202 is connected to the audio wire 208, the one or more audio control devices can combine and direct the audio signal for both the second speaker assembly 204 and the first speaker assembly 202 to the second speaker assembly 204.

Thus, the or more audio control devices can be activated by the audio control buttons 210 and 310 of the headphones 102 to provide a seamless tool for the DJ 100 to mix and/or transition from one music track to another. In particular, with just a touch of a button, the DJ 100 can mute the first speaker assembly 202, allowing the DJ 100 to hear the music track playing through the sound system. Moreover, the audio signal for the first speaker assembly 202 is not lost, as with conventional headphones and techniques. In contrast, the audio signal for the first speaker assembly 202 is automatically combined with the audio signal for the second speaker assembly 204. Once combined, the one or more audio control devices direct the audio signal to the second speaker assembly 204. Thus, allowing the DJ 100 to hear all the musical components in the music track. By so doing, one or more implementations enable the DJ 100 to use both hands and stand in a comfortable stance while mixing music tracks. Thus, the headphones 102 can avoid the need for the DJ 100 to hold the mixing headphones with a hand, or crank the DJ's neck to hold the headphones between the DJ's ear and shoulder in an awkward and uncomfortable stance.

Similar to the first audio control button 210, the second audio control button 310 can activate and deactivate the one or more audio control devices. When the second audio control button 310 activates the one or more audio control devices; however, the one or more audio control devices can mute the second speaker assembly 204 and push the complete or combined audio signal to the first speaker assembly 202. Thus, a right-handed DJ, for example, can press the second audio control button 310 to the "ON" position to activate the one or more audio control devices.

Once activated by the second audio control button 310, the one or more audio control devices can mute the second speaker assembly 204. Additionally, the one or more audio control devices can also combine the audio signal intended for the second speaker assembly 204 with the audio signal for the first speaker assembly 202 and directed the combined audio signal to the first speaker assembly 202. Thus, one or more implementations of the present invention can allow the DJ 100 to mute either the first or the second speaker assembly 202, 204, while sending a complete or combined audio signal to the other of the first and second speaker assembly 202, 204.

Moreover, in one or more implementations the one or more audio control devices headphones 102 can mute both the first and second speaker assemblies. With both the left speaker assembly 202 and the right speaker assembly 204 muted, the DJ 100 can concentrate on the music track(s) being played on the sound system, or the reaction of the audience. For example, in one or more implementations the one or more audio control devices to mute both the first and the second speaker assemblies 202, 204 when both the left audio control button 210 and the right audio control button 310 are in the "ON" position. Additionally or alternatively, the headphones 100 can include a mute button 212 as shown in Figures 2 and 3. Upon pressing of the mute button 212, the one or more audio control devices can mute both the left speaker assembly 202 and the right speaker assembly 204.

Figures 2 and 3 illustrate that the mute button 212 is positioned on the second speaker assembly 204. In alternative implementations, the mute button 212 can be positioned on the right speaker assembly 204 or the headband 206. In yet further implementations, both the first speaker assembly 202 and the second speaker assembly 204 can include a mute button 212. In any event, one or more implementations of the present invention can allow the DJ 100 to mute selectively mute one or both of the first and second speaker assemblies 202, 204 of the headphones 102.

In one or more additional implementations, the headphones 102 can include one or more mechanisms other than the audio control buttons 210 and 310 for activating and deactivating the one or more audio control devices. For example, in one or more implementations the headphones 102 can include one or more pivots that allow the first and second speaker assemblies 202, 204 to rotate away from a default listening position (see Figures 1-3). As used herein, term "default listening position" refers to a position of a speaker assembly that allows a user to listen to the speaker assembly when wearing the headphones 102 (see Figures 1-3). Along with the one or more pivots, the headphones 102 can include a rotation switch that is configured to activate the one or more audio control devices upon rotation of a speaker assembly. Thus, according to one or more implementations, the DJ 100 can rotate either the first or second speaker assembly 202, 204 from a default listening position (see Figures 1-3) to an activated position to activate the one or more audio control devices.

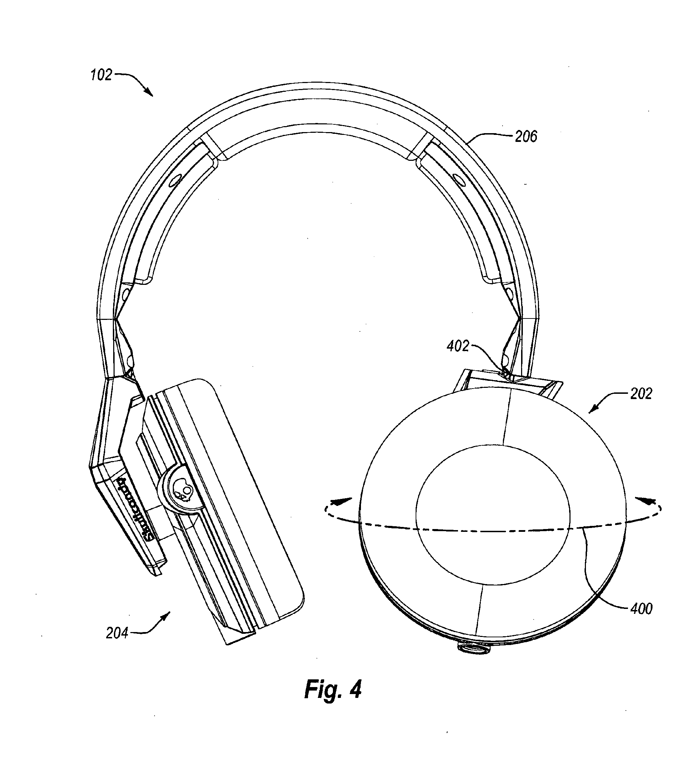

For example, Figure 4 illustrates that the headphones 102 include a pivot 402 and associated rotation switch. The pivot 402 can rotatably couple the first speaker assembly 202 to the headband 206. The pivot 402 can allow the first speaker assembly 202 to rotate from a default listening position as shown in Figures 1-3 to an activated position as shown in Figure 4. In particular, the pivot 402 can allow the first speaker assembly 202 to rotation in a direction 400 about an axis extending from the top of the first speaker assembly to the bottom of the first speaker assembly 202.

In particular, rotation switches can include a hinged connection, or similar connection, that allows the speaker assemblies 202 and 204 to rotate with respect to the headband 206. In addition, the rotation switches can include one or more sensing components that detect when the speaker assemblies 202 and 204 are rotated to a particular position with respect to the headband 206. For example, the rotation switches can include various electromechanical contact switches that are brought in and out of contact as the DJ 100 rotates the speaker assemblies 202 and 204. Alternatively, other similar types of switches or sensors can be used to detect the position of the speaker assemblies 202 and 204 with respect to the headband 202.

One will appreciate in light of the disclosure herein that the rotation switch associated with the pivot 402 can activate the one or more audio control devices based upon a predetermined amount of rotation of the first speaker assembly 202. In one or more implementations, the rotation switch can activate the one or more audio control devices upon 90 degrees of rotation of the first speaker assembly 202. In other implementations, the rotation switch can activate the one or more audio control devices upon 45 degrees or 180 degrees of rotation of the first speaker assembly 202, or another desired degree of rotation.

In any event, a DJ 100 can control how the audio signals are directed to the speaker assemblies 202, 204 by rotating one of the speaker assemblies 202, 204. For instance, the DJ 100 can rotate the first speaker assembly 202 about the pivot 402 in a direction 400 from a default listening position to an activated position as shown by Figure 4. By so doing, the DJ 100 can activate the one or more audio control devices, which in turn can mute the first speaker assembly 202. At the same time the first speaker assembly 202 is muted, the one or more audio control devices can combine the first channel of the audio signal that was being played on the first speaker assembly 202 with the second channel of the audio signal being played on the second speaker assembly 204. The one or more audio control devices can then direct the combined or compete audio signal to the second speaker assembly 204 such that the second speaker assembly 204 plays both channels or components of the audio signal simultaneously. Specifically, the second speaker assembly 204 can effectively receive and play a mono signal based on a combination of the prior stereo signals played individually by each speaker assembly prior to the DJ 100 pressing the first audio control button 210.

Thus, the or more audio control devices can be activated by rotation of the speaker assemblies 202, 204 of the headphones 102 to provide a seamless tool for the DJ 100 to mix and/or transition from one music track to another. In particular, the DJ 100 can rotate a speaker assembly 202, 204 away from his ear to allow him to hear the crowd or audio being played by a sound system. At the same time, the one or more audio control devices can mute the rotated speaker assembly further allowing the DJ 100 to hear the music track playing through the sound system. Moreover, as described above, the audio signal for the first speaker assembly 202 is not lost, as with conventional headphones and techniques. In contrast, the audio signal for the first speaker assembly 202 is automatically combined with the audio signal for the second speaker assembly 204, and directed to the second speaker assembly 204.

Similar to the pivot 402 and associated rotation switch, the headphones 102 can include a second pivot and associated rotation switch positioned between the second speaker assembly 204 and the headband 206. The second pivot and associated rotation switch can activate and deactivate the one or more audio control devices. When a DJ 100 rotates the second speaker assembly 204 about the second pivot, the associated rotation switch can activate the one or more audio control devices. Upon activation by rotation of the second speaker assembly 204, the one or more audio control devices can mute the second speaker assembly 204 and push the complete or combined audio signal to the first speaker assembly 202. Thus, a right-handed DJ, for example, can rotate the second speaker assembly to activate the one or more audio control devices.

Once activated by rotation of the second speaker assembly 204, the one or more audio control devices can mute the second speaker assembly 204. Additionally, the one or more audio control devices can also combine the audio signal intended for the second speaker assembly 204 with the audio signal for the first speaker assembly 202 and directed the combined audio signal to the first speaker assembly 202. Thus, one or more implementations of the present invention can allow the DJ 100 to mute either the first or the second speaker assembly 202, 204, while sending a complete or combined audio signal to the other of the first and second speaker assembly 202, 204.

While Figure 4 and the associated text describes hat a DJ 100 can rotate either the first or second speaker assemblies 202, 204 about an axis extending from the top to the bottom of the speaker assembly to activate the one or more audio control devices, the present invention is not so limited. Indeed, the pivots connecting the speaker assemblies 202, 204 to the headband 208 can allow the speaker assemblies 202, 204 to rotate in any number of directions to activate the one or more audio control devices. For example, the headphones 102 can include pivots that allow the speaker assemblies to rotate outward away a user's ear. Alternatively, headphones 102 can include pivots that allow the speaker assemblies to rotate backward or forward away a user's ear. In any event, rotation of either the first speaker assembly 202 or the second speaker assembly 204 away from the default listening position can activate the one or more audio control devices in a manner similar to that described herein above in relation to Figure 4.

In further implementations of the present invention, rotation of the first or second speaker assemblies 202, 204 out of a default listening position may not mute the rotated speaker assembly. The mere rotation of the speaker assembly 202, 204 away from the ear of the DJ 100 can allow the DJ 100 to hear the audience or audio being played over a sound system. In such implementations, the mute button 212 can activate the one or more audio control devices to mute the rotate speaker assembly. Thus, the DJ 100 can choose to rotate a speaker assembly 202, 204 away from his ear with or without muting the rotated speaker assembly 202, 204.

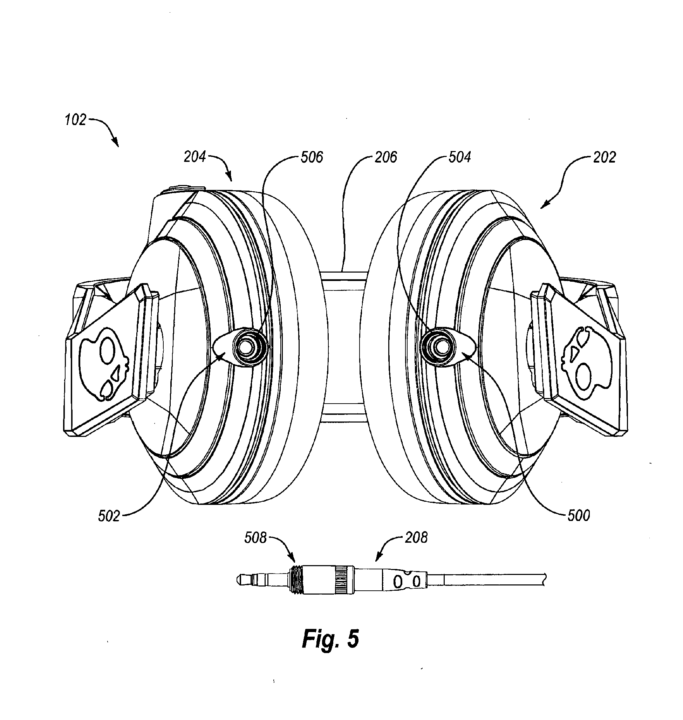

As alluded to earlier, the headphones 102 can allow a DJ 100 to connect an audio cable 208 to either the first speaker assembly 202 or the second speaker assembly 204. For example, Figure 5 illustrates a bottom view of the headphones 102. As shown by Figure 5, the first speaker assembly 202 can include a first input jack 500 and the second speaker assembly 204 can include a second input jack 502. Both the first input jack 500 and the second input jack 502 can selectively receive an audio cable 208. Thus, a DJ 100 can selectively choose to secure the audio cable 208 to either input jack 500, 502. Thus, a DJ 100 can choose to run the audio cable 208 from the first speaker assembly 202 or the second speaker assembly 204. The dual input jacks 500, 502 can ensure that the audio cable 208 is out of the way for either a left-handed or right-handed DJ 100.

Furthermore, the headphones 102 can include one or more audio control devices associated with the first and second input jacks 500, 502. The one or more audio control devices can allow the first input jack 500 to transmit one or more signals received via an audio cable 208 secured thereto to both the first and second speaker assemblies 202, 204. Similarly, the one or more audio control devices can allow the second input jack 502 can transmit one or more signals received via an audio cable 208 secured thereto to both the first and second speaker assemblies 202, 204.

More specifically, the audio cable 208 can transmit a stereo audio signal to the first input jack 500. The one or more audio control devices can send a first channel of the stereo audio signal to the first speaker assembly 202 and a second channel of the stereo audio signal to the second speaker assembly 204. Along similar lines, when the audio cable 208 is connected to the second input jack 502. The one or more audio control devices send a first channel of the stereo audio signal to the first speaker assembly 202 and a second channel of the stereo audio signal to the second speaker assembly 204.

In addition to the foregoing, the headphones 102 can include a locking mechanism configured to prevent the audio cable 208 from unintentionally releasing from the selected input jack 500, 502. For example, each input jack 500, 502 can include internal threads 504, 506. The internal threads 504, 506 can mate with external threads 508 on the audio cable 208 thereby locking the audio cable 208 to the headphones 208. In alternative implementations, the audio cable 208 can lock to an input jack 500, 502 via a snap-fit engagement or other locking mechanism.

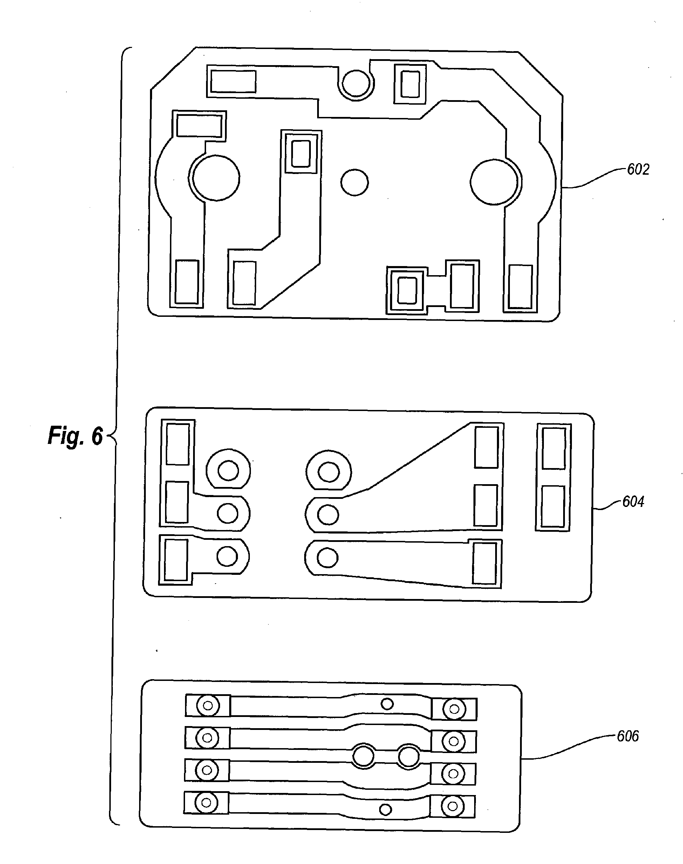

As discussed herein above, the headphones 102 can include one or more audio control devices that allow a DJ 100 or other user to control muting, transferring, and combining of audio signals. The one or more audio control devices can include a printed circuit board ("PCB") or a printed wiring board (PWB) and/or one or more electrical or electromechanical switches. For example, Figure 6 illustrates various PWB that can function as audio control devices as described hereinabove.

For example, the one or more audio control devices can include one or more jack PWBs 602. In particular, in one or more implementations the headphones 102 can include a first jack PWB 602 positioned within the first speaker assembly 202 and a second jack PWB 602 positioned within the second speaker assembly 204. As described hereinabove, the jack PWBs 602 can receive and transmit audio signals received from the audio cable 208. The jack PWBs 602 can each be associated with an input jack 500, 502.

The one or more audio control devices can also include one or more mute PWBs 604. In particular, in one or more implementations the headphones 102 can include a mute PWB 604 associated with each mute button 212. Thus, in at least one implementation the headphones 102 illustrated in Figures 1-3 can include a single mute PWB 604. In alternative implementations, the headphones 102 can include two mute buttons 212, one on each speaker assembly 202, 204, and thus, two mute PWBs 604. In any event, the mute PWB, when activated can mute one or more of the speaker assemblies 202, 204.

The one or more audio control devices can also include one or more mono PWBs 606. In particular, in one or more implementations the headphones 102 can include a first mono PWB 606 associated with the first speaker assembly 202 and a second mono PWB 606 associated with the second speaker assembly 204. The mono PWBs 606 can combine two stereo channels into a signal mono audio signal and transfer the mono signal to a single speaker assembly and/or mute the other speaker assembly 202, 204. Thus, in at least one implementation of the present invention, the one or more audio control devices can include five PWBs. In particular, two jack PWBs 602, one mute PWB 604, and two mono PWBs 606.

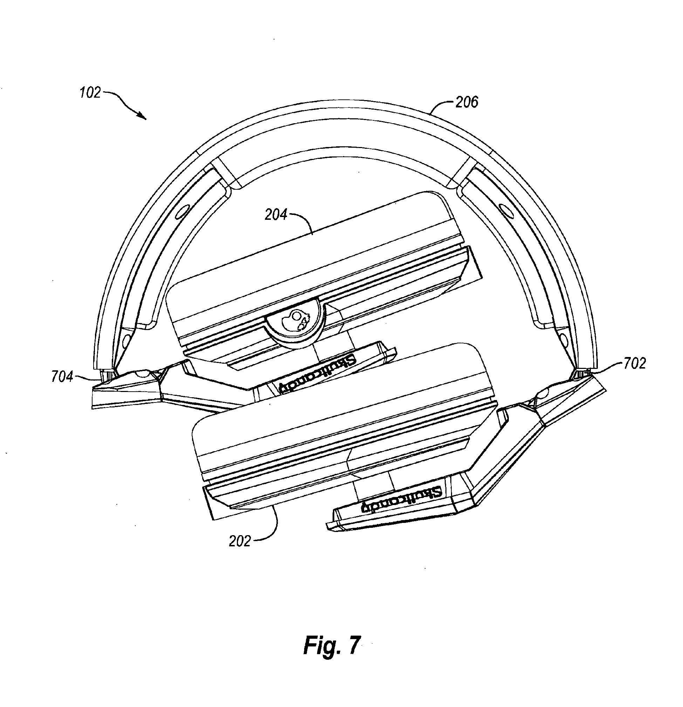

In addition to the foregoing features and benefits, the headphones 102 can also include one or more folding pivots that allow for easy folding of the headphones 102 into a compact storage configuration. For example, Figure 7 illustrates that the headphones 102 can include a first folding pivot 702 connecting the first speaker assembly 202 to the headband 206. Figure 7 also illustrates that the headphones 102 can include a second folding pivot 704 connecting the second speaker assembly 204 to the headband 206. In at least one implementation, the folding pivots 702, 704 and/or pivots 402 can be a single mechanism such that a single pivot can allow for folding of the headphones 102 into a compact position, and rotating of a speaker assembly from a default listening position.

The present invention thus can be embodied in other specific forms. The described embodiments are to be considered in all respects only as illustrative and not restrictive. The scope of the invention is, therefore, indicated by the appended claims rather than by the foregoing description..

## Claims

1. A set of headphones (102) configured to enable a user to control how stereo audio signals are directed to speaker assemblies (202, 204) within the headphones (102), comprising:
a first speaker assembly (202);
a second speaker assembly (204);
an audio control device operatively associated with one or more of the first speaker assembly (202) and the second speaker (204) assembly; and
**characterized by** a first pivot (402) configured to enable the first speaker assembly (202) to rotate in and out of a default listening position, wherein the audio control device is activated when the first speaker assembly (202) is rotated out of the default listening position;
wherein upon activation, the audio control device is configured to combine and direct first and second audio signals to one of the first and second speaker assemblies (202, 204), and mute the other of the first and second speaker assemblies (202, 204).

2. The set of headphones (102) of claim 1, further comprising a first audio control button (210, 310), the first audio control button being configured to activate and deactivate the audio control device.

3. The set of headphones (102) of claim 2, wherein the audio control device is configured to combine and direct the first and second audio signals to the first speaker assembly (202) when the first audio control button (210, 310) is in an on position.

4. The set of headphones (102) of claim 3, further comprising a second audio control button (210, 310), the second audio control button (210, 310) being configured to activate and deactivate the audio control device.

5. The set of headphones of claim 4, wherein the audio control device is configured to combine and direct the first and second audio signals to the second speaker assembly (204) when the second audio control button (210, 310) is in an on position.

6. The set of headphones (102) as recited in claim 1, further comprising a second pivot (402) configured to allow the second speaker assembly (204) to rotate in and out of a default listening position.

7. The set of headphones (102) of claim 1, further comprising a mute button (212), wherein upon activation of the mute button (212) both the first and second speaker assemblies (202, 204) are muted.

8. The set of headphones (102) of claim 1, wherein the audio control device comprises one or more printed wiring boards.

9. The set of headphones (102) of claim 1, configured to enable a user to selectively connect an audio cable (208) to either a right side or a left side of the headphones (102), further comprising:
a first input jack (500, 502) positioned on the first speaker assembly (202), the first input jack (500, 502) being configured to receive an audio cable (208); and
a second input jack (500, 502) positioned on the second speaker assembly (204) the second input jack (500, 502) being configured to receive an audio cable (208); and
the audio control device configured to transmit audio signals received via an audio cable(208) secured to either the first input jack (500, 502) or the second input jack (500, 502) to both the first and second speaker assemblies (202, 204).

10. The set of headphones (102) of claim 9, wherein:
the first and second audio signals comprise a two channel stereo signal;
the audio control device is configured to transmit the first audio signal of the two channel stereo signal to the first speaker assembly (202); and
the audio control device is configured to transmit the second audio signal of the two channel stereo signal to the second speaker assembly (204).

11. The set of headphones (102) of claim 9, further comprising a locking mechanism (504, 506) configured to prevent the audio cable (208) from unintentionally releasing from the first input jack (500, 502).

12. The set of headphones (102) of claim 11, wherein the locking mechanism (504, 506) comprises an internally threaded receptacle configured to mate with external threads on the audio cable (208).

## Patentansprüche

1. Kopfhörersatz (102), der so ausgelegt ist, dass er einen Benutzer in die Lage versetzt, die Art und Weise, in der Stereo-Tonsignale zu Lautsprecherbaugruppen (202, 204) innerhalb der Kopfhörer (102) gelenkt werden, zu steuern, und welcher folgendes umfasst:
eine erste Lautsprecherbaugruppe (202);
eine zweite Lautsprecherbaugruppe (204);
ein funktionsmäßig einer der beiden Lautsprecherbaugruppen (202, 204) oder beiden Lautsprecherbaugruppen (202, 204) zugeordnetes Tonsteuergerät;
**gekennzeichnet durch** ein erstes Drehgelenk (402), das so ausgebildet ist, dass es eine Drehung der ersten Lautsprecherbaugruppe (202) in eine Standardhörposition und aus dieser heraus gestattet, wobei das Tonsteuergerät aktiviert ist, wenn die erste Lautsprecherbaugruppe (202) aus der Standardhörposition heraus gedreht ist;
wobei nach Aktivierung das Tonsteuergerät so ausgelegt ist, dass es erste und zweite Tonsignale miteinander kombiniert und zu der ersten oder der zweiten Lautsprecherbaugruppe (202, 204) lenkt und die jeweils andere der beiden Lautsprecherbaugruppen (202, 204) stumm schaltet.

2. Kopfhörersatz (102) nach Anspruch 1, welcher des Weiteren einen ersten Tonsteuerknopf (210, 310) aufweist, wobei der erste Tonsteuerknopf so ausgelegt ist, dass er das Tonsteuergerät aktiviert und deaktiviert.

3. Kopfhörersatz (102) nach Anspruch 2, bei welchem das Tonsteuergerät so ausgelegt ist, dass es die ersten und zweiten Tonsignale miteinander kombiniert und zu der ersten Lautsprecherbaugruppe (202) lenkt, wenn der erste Tonsteuerknopf (210, 310) sich in einer Einschaltposition befindet.

4. Kopfhörersatz (102) nach Anspruch 3, welcher des Weiteren einen zweiten Tonsteuerknopf (210, 310) aufweist, wobei der zweite Tonsteuerknopf (210, 310) so ausgebildet ist, dass er das Tonsteuergerät aktiviert und deaktiviert.

5. Kopfhörersatz (102) nach Anspruch 4, bei welchem das Tonsteuergerät so ausgelegt ist, dass es die ersten und zweiten Tonsignale miteinander kombiniert und der zweiten Lautsprecherbaugruppe (204) zuleitet, wenn sich der zweite Tonsteuerknopf (210, 310) in Einschaltposition befindet.

6. Kopfhörersatz (102) nach Anspruch 1, welcher des Weiteren ein zweites Drehgelenk (402) aufweist, das so ausgelegt ist, dass es eine Drehung der ersten Lautsprecherbaugruppe (202) in eine Standardhörposition und aus dieser heraus gestattet.

7. Kopfhörersatz (102) nach Anspruch 1, welcher des Weiteren einen Stummschaltknopf (212) aufweist, wobei nach Betätigung des Stummschaltknopfes (212) sowohl die erste Lautsprecherbaugruppe (202) als auch die zweite Lautsprecherbaugruppe (204) stumm geschaltet werden.

8. Kopfhörersatz (102) nach Anspruch 1, bei welchem das Tonsteuergerät eine oder mehrere Leiterplatten aufweist.

9. Kopfhörersatz (102) nach Anspruch 1, der so ausgebildet ist, dass er es einem Benutzer ermöglicht, gezielt ein Audiokabel (208) entweder an die rechte Seite oder an die linke Seite der Kopfhörer (102) anzuschließen, und welcher folgendes umfasst:
eine erste Eingangsbuchse (500, 502), die auf der ersten Lautsprecherbaugruppe (202) angeordnet ist, wobei die erste Eingangsbuchse (500, 502) in der Form ausgelegt ist, dass sie ein Audiokabel (208) aufnimmt;
und
eine zweite Eingangsbuchse (500, 502), die auf der zweiten Lautsprecherbaugruppe (204) angeordnet ist, wobei die zweite Eingangsbuchse (500, 502) in der Form ausgelegt ist, dass sie ein Audiokabel (208) aufnimmt; und
das Tonsteuergerät, das so ausgelegt ist, dass es über ein Audiokabel (208), das an der ersten Eingangsbuchse (500, 502) oder der zweiten Eingangsbuchse (500, 502) angebracht ist, empfangene Tonsignale sowohl zu der ersten Lautsprecherbaugruppe als auch zu der zweiten Lautsprecherbaugruppe (202, 204) überträgt.

10. Kopfhörersatz (102) nach Anspruch 9, bei welchem:
das erste und das zweite Tonsignal jeweils ein Zweikanal-Stereosignal umfassen;
das Tonsteuergerät so ausgelegt ist, dass es das erste Tonsignal des Zweikanal-Stereosignals zu der ersten Lautsprecherbaugruppe (202) überträgt; und
das Tonsteuergerät so ausgelegt ist, dass es das zweite Tonsignal des Zweikanal-Stereosignals zu der zweiten Lautsprecherbaugruppe (204) überträgt.

11. Kopfhörersatz (102) nach Anspruch 9, welcher des Weiteren eine Verriegelungsmechanik (504, 506) aufweist, die so ausgelegt ist, dass ein unbeabsichtigtes Lösen des Audiokabels (208) von der ersten Eingangsbuchse (500, 502) verhindert wird.

12. Kopfhörersatz (102) nach Anspruch 11, bei welchem die Verriegelungsmechanik (504, 506) eine Steckerbuchse mit Innengewinde aufweist, das mit Außengewinden auf dem Audiokabel (208) zusammengehört.

## Revendications

1. Casque d'écoute (102) adapté pour permettre à un utilisateur de commander comment des signaux audio stéréo sont acheminés à des assemblages écouteurs (202, 204) à l'intérieur du casque (102), comprenant
un premier assemblage écouteur (202),
un second assemblage écouteur (204),
un dispositif de commande fonctionnellement associé à un ou plusieurs des premier (202) et second (204) assemblages écouteurs, et **caractérisé par** un premier pivot (402) configuré pour permettre au premier assemblage écouteur de pivoter vers l'intérieur et vers l'extérieur à partir d'une position d'écoute à défaut, le dispositif de commande audio étant activé lorsque le premier assemblage écouteur (202) est pivoté en dehors de la position d'écoute à défaut, après activation, le dispositif de commande audio est adapté pour combiner et diriger des premier et second signaux audio à un parmi le premier et le second assemblages écouteurs (202, 204) et rendre muet l'autre parmi le premier et le second assemblages écouteurs (202, 204).

2. Casque d'écoute (102) selon la revendication 1, comprenant en outre un premier bouton de commande audio (210, 310), le premier bouton de commande audio étant adapté pour activer et désactiver le dispositif de commande audio.

3. Casque d'écoute (102) selon la revendication 2, **caractérisé en ce que** le dispositif de commande audio est adapté pour combiner et diriger des premier et second signaux audio au premier assemblage écouteur (202), lorsque le premier bouton de commande audio (210, 310) est dans une position de fonctionnement.

4. Casque d'écoute (102) selon la revendication 3, comprenant en outre un second bouton de commande audio (210, 310), le second bouton de commande audio étant adapté pour activer et désactiver le dispositif de commande audio.

5. Casque d'écoute (102) selon la revendication 4, **caractérisé en ce que** le dispositif de commande audio est adapté pour combiner et diriger des premier et second signaux audio au second assemblage écouteur (204), lorsque le second bouton de commande audio (210, 310) est dans une position de fonctionnement.

6. Casque d'écoute (102) selon la revendication 1, comprenant en outre un second pivot (402) configuré pour permettre au second assemblage écouteur de pivoter vers l'intérieur et vers l'extérieur à partir d'une position d'écoute à défaut.

7. Casque d'écoute (102) selon la revendication 1, comprenant en outre un bouton «muet» (212), le premier et le second assemblages écouteurs (202, 204) étant tous les deux rendus muets après activation du bouton «muet» (212).

8. Casque d'écoute (102) selon la revendication 1, **caractérisé en ce que** le dispositif de commande audio comprend un ou plusieurs circuits imprimés.

9. Casque d'écoute (102) selon la revendication 1, adapté pour permettre à un utilisateur de connecter un câble audio (208) soit à un côté droit soit à un côté gauche du casque d'écoute (102), comprenant en outre:
une première prise d'entrée (500, 502) située sur le premier assemblage écouteur (202), la première prise d'entrée (500, 502) étant adaptée pour recevoir un câble audio (208), et
une seconde prise d'entrée (500, 502) située sur le second assemblage écouteur (204), la seconde prise d'entrée (500, 502) étant adaptée pour recevoir un câble audio (208), et
le dispositif de commande audio adapté pour diriger des signaux audio reçus par un câble audio (208) connecté à la première prise d'entrée (500, 502) ou à la seconde prise d'entrée (500, 502), aussi bien au premier qu'au second assemblages écouteurs (202, 204).

10. Casque d'écoute (102) selon la revendication 9, **caractérisé en ce que**
les premier et second signaux audio comprennent un signal audio stéréo à deux canaux,
le dispositif de commande audio est configuré pour transmettre le premier signal audio du signal audio stéréo à deux canaux au premier assemblage écouteur (202), et
le dispositif de commande audio est configuré pour transmettre le second signal audio du signal audio stéréo à deux canaux au second assemblage écouteur (204).

11. Casque d'écoute (102) selon la revendication 9, comprenant en outre un mécanisme de verrouillage (504, 506) adapté pour éviter que le câble audio (208) se détache intempestivement de la première prise d'entrée (500, 502).

12. Casque d'écoute (102) selon la revendication 1, **caractérisé en ce que** le mécanisme de verrouillage (504, 506) comprend un réceptacle taraudé adapté pour coopérer avec des filetages sur le câble audio (208).
